# EUROPÄISCHE PATENTSCHRIFT

(11) **EP 3 519 212 B1**
(45) Veröffentlichungstag und Bekanntmachung des Hinweises auf die Patenterteilung: **26.08.2020**
(21) Anmeldenummer: 17772702.1
(22) Anmeldetag: 26.09.2017
(51) Int. Cl.: B60D 1/36, B60D 1/01, B60D 1/62

(54) **VORRICHTUNG ZUR POSITIONSERKENNUNG EINES ERSTEN ODER ZWEITEN MITEINANDER ZU KUPPELNDEN FAHRZEUGS**
DEVICE FOR DETECTING THE POSITION OF A FIRST OR SECOND VEHICLE TO BE COUPLED TOGETHER
DISPOSITIF PERMETTANT DE DÉTECTER LA POSITION D'UN PREMIER OU D'UN DEUXIÈME VÉHICULE À ATTELER L'UN À L'AUTRE

(30) Priorität: 27.09.2016 DE 102016218603
(43) Veröffentlichungstag der Anmeldung: 07.08.2019
(73) Patentinhaber: JOST-Werke Deutschland GmbH, 63263 Neu-Isenburg (DE)
(72) Erfinder: GENHEIMER, Christian, 97204 Höchberg (DE); RAAB, Dieter, 63322 Rödermark (DE); SAUPE, Swen, 55126 Mainz (DE); ALGÜERA, José Manuel, 63739 Aschaffenburg (DE)
(74) Vertreter: Mehler Achler
(86) Internationale Anmeldenummer: PCT/EP2017/074369
(87) Internationale Veröffentlichungsnummer: WO 2018/060192

(56) Entgegenhaltungen:
- DE-A1-102006 040 879
- DE-A1-102014 212 821
- US-A1- 2010 013 188

## Beschreibung

Die Erfindung betrifft eine Vorrichtung zur Positionserkennung eines ersten oder zweiten miteinander zu kuppelnden Fahrzeugs entsprechend der im Oberbegriff des Anspruchs 1 stehenden Merkmale.

Das erste und zweite Fahrzeug werden mittels kompatibler Kupplungsmittel lösbar miteinander verbunden, wobei das erste Fahrzeug das ziehende Fahrzeug und zu diesem Zweck üblicherweise motorisch angetrieben ist. Das oder die zweite(n) Fahrzeug(e) sind dann ein antriebsloses Anhängerfahrzeug, welches von dem ersten Fahrzeug gezogen wird. Das erste Fahrzeug kann beispielsweise eine Sattelzugmaschine mit einer Sattelkupplung und das zweite Fahrzeug ein Auflieger mit einem Königszapfen sein. Derartig verbundene erste und zweite Fahrzeuge werden auch als Sattelzug bezeichnet. Alternativ können das erste Fahrzeug auch ein Motorwagen mit einer heckseitig daran angeordneten Bolzenkupplung und das zweite Fahrzeug ein Deichselanhänger mit einer an der Deichsel endseitig ausgebildeten Zugöse sein. Auf diese Weise aneinander gekuppelte erste und zweite Fahrzeuge werden auch als Gliederzug bezeichnet. Es sind darüber hinaus auch Mischformen denkbar, bei denen zum Beispiel das erste Fahrzeug eine Sattelzugmaschine ist, an welche unmittelbar ein Auflieger und an diesen ein Deichselanhängers angekuppelt ist. Bei einer isolierten Betrachtung der Anhängerfahrzeuge wäre das ziehende Fahrzeug, beispielsweise der Auflieger, das erste Fahrzeug und das gezogene Fahrzeug, beispielweise der Deichselanhänger, das zweite Fahrzeug.

Es gibt bereits Bestrebungen, die vorstehend beschriebenen Fahrzeuge auf einem Speditionshof autonom fahren zu lassen, das heißt ohne Anwesenheit eines in dem ersten Fahrzeug befindlichen Fahrers. Die DE 103 22 765 B4 offenbart einen derartigen automatisierten Speditionshof für autonom fahrende Fahrzeuge. Das autonome Fahren umfasst auch ein automatisiertes An- und Abkuppeln des ersten und zweiten Fahrzeuges. Der Speditionshof kann außerdem mit einer automatischen Tankstelle und/oder mit einer automatischen Waschstation ausgestattet sein, um die jeweiligen Fahrzeuge erforderlichenfalls zu betanken beziehungsweise zu waschen.

Aus der DE 10 2006 057 610 A1 ist bereits ein Assistenzsystem bekannt geworden, das dem Fahrer das Ankuppeln, Andocken oder Unterfahren des ersten Fahrzeugs an ein Zielobjekt erleichtern soll. Unter einem Zielobjekt werden Anhänger, Auflieger, Wechselbrücken oder Laderampen verstanden. Das bekannte Assistenzsystem umfasst im Wesentlichen einen Bildsensor und eine Recheneinheit, mit deren Hilfe die Zielobjekthöhe seitens des ersten Fahrzeugs eingestellt werden soll. So kann zum Beispiel durch eine Szenenanalyse ein bestimmtes Zielobjekt erkannt und diesem gespeicherte Modelldaten zugeordnet werden, so dass zumindest eine ungefähre Zielobjekthöhe seitens des ersten Fahrzeugs vor dem eigentlichen Ankuppeln voreingestellt ist. Das bekannte Assistenzsystem basiert jedoch ausschließlich auf einem Bildsensor, der ein Abbild des zweiten Kupplungsmittels einer elektronischen Steuereinheit bereitstellt, die wiederum mit einer geeigneten Software das zweite Kupplungsmittel identifizieren soll. Die Objekterkennung mittels eines Bildsensors hat sich jedoch als wenig zuverlässig erwiesen, da dieser besonders empfindlich bezüglich wechselnder Lichtverhältnisse und einer im Betrieb unvermeidlichen Verschmutzung ist. Dieses macht sich besonders nachteilig bei autonom rangierenden Fahrzeugen bemerkbar, wenn kein Fahrer anwesend ist, um in den Kuppelvorgang einzugreifen. Das Dokument US 2010/013188 A1 offenbart einen Lastzug gemäß dem Oberbegriff des Anspruchs 1.

Der Erfindung lag daher die Aufgabe zugrunde, eine Vorrichtung zur Positionserkennung eines ersten oder zweiten miteinander zu kuppelnden Fahrzeugs bereitzustellen, welche ein betriebssicheres und präzises Ankuppeln unabhängig von vorherrschenden Umwelteinflüssen ermöglicht.

Die zugrunde liegende Aufgabe wird erfindungsgemäß durch die kennzeichnenden Merkmale des Anspruchs 1 gelöst. Mit Hilfe einer funkbasierten Ortung erkennt die Sender-/Empfängereinheit den in Ihrem räumlichen Messbereich befindlichen Transponder. Der Transponder ist einer definierten Position am bezüglich der Sender-/Empfängereinheit anderen Fahrzeug zugeordnet und wird von der Sender-/Empfängereinheit erkannt. Die Ortung ergibt sich aus einer von der Sender-/Empfängereinheit initiierten Laufzeitmessung von Funksignalen, die von dem Transponder aufgenommen, verarbeitet und reflektiert wird. Aus der Laufzeitmessung des Funksignals kann die direkte Entfernung des Transponders zu der Sender-/Empfängereinheit in Echtzeit bestimmt werden.

Vorteilhafterweise können in dem Transponder zusätzliche Informationen zu dem Fahrzeug oder dem Fahrzeugtyp hinterlegt sein, an welchem der Transponder dauerhaft befestigt ist. Der Fahrzeugtyp definiert, ob das zweite Fahrzeug ein Auflieger mit einem Königszapfen oder ein Deichselanhänger mit einer an der Deichsel endseitig ausgebildeten Zugöse ist. Hierdurch kann vermieden werden, dass zum Beispiel eine Sattelzugmaschine im autonomen Fahrbetrieb fälschlicherweise versucht, einen Deichselanhänger anzukuppeln.

Unter einem Transponder wird ein Funk-Kommunikationsgerät verstanden, das eingehende Signale aufnimmt und automatisch beantwortet bzw. weiterleitet. Erfindungsgemäß können grundsätzlich sowohl passive Transponder als auch aktive Transponder zum Einsatz kommen. Passive Transponder beziehen die zur Kommunikation und zur Abarbeitung interner Prozesse benötigte Energie ausschließlich aus der Schreib-/Leseeinheit, im vorliegenden Fall der oder den Sender-/Empfängereinheit(en). Passive Transponder benötigen keine eigene Stromversorgung und können auf den verhältnismäßig kurzen Distanzen vor dem Ankuppeln des ersten und zweiten Fahrzeugs arbeiten. Die bekannteste Bauart eines passiven Transponders ist die Radio Frequency Identification RFID. Kernstück eines solchen passiven Transponders ist ein darin verbauter RFID-Chip.

Aktive Transponder verfügen über eine eigene Energieversorgung. Entweder haben sie eine eingebaute Batterie oder werden an ein externes Stromnetz angeschlossen. Dadurch sind nicht nur größere Kommunikationsreichweiten möglich, auch die Verwaltung größerer Datenspeicher bzw. der Betrieb einer integrierten Sensorik wird realisierbar. Aufgrund der Notwendigkeit einer Energieversorgung bei aktiven Transpondern wird bevorzugt immer dann auf passive Transponder zurückgegriffen, wenn keine zusätzlichen Daten beispielsweise von weiteren mit dem aktiven Transponder verbundenen Sensoren an die Sender-/Empfängereinheit übertragen zu werden brauchen.

Vorzugsweise sind an dem anderen zweiten oder ersten Fahrzeug mehrere Bezugspunkte vorhanden, an denen jeweils ein Transponder befestigbar ist, wobei jeder Transponder das Echo derart individuell codiert, dass es dem jeweiligen Transponder eindeutig zuordbar ist. Die Genauigkeit der Ortung kann weiter präzisiert werden, wenn die mehreren in den jeweiligen Bezugspunkten angebrachten Transponder in einem bekannten Abstand zueinander angeordnet sind. In einem Fuhrpark kann dieser Abstand der Transponder an dem zu erfassenden Fahrzeug immer gleich gewählt und in der Sender-/Empfängereinheit hinterlegt sein.

Vorteilhafterweise umfasst die Sensoreinrichtung ein elektronisches Steuergerät, welches aus der Laufzeit des Funksignals die direkte Entfernung zu dem mindestens einen Transponder berechnet. Das elektronische Steuergerät kann entweder in die Sender-/Empfängereinheit integriert und mit dieser eine integrale Baueinheit bilden oder als separate Baueinheit am Fahrzeug angebracht sein. Das elektronische Steuergerät kann dem ersten Fahrzeug basierend auf der Laufzeitmessung des Funksignals zu dem/den Transponder(n) ein Steuersignal bereitstellen, mit welchem Einfluss auf die Fahrzeugsteuerung genommen wird. Die Fahrzeugsteuerung umfasst eine Manipulation des Getriebes, der Motorsteuerung, der Lenkung, der Niveauregulierung (Luftfederung) und/oder der Bremse.

Es hat sich als besonders günstig herausgestellt, wenn die Sensoreinrichtung mindestens eine Antenne umfasst, die an die zugehörige Sender-/Empfängereinheit angeschlossen ist. Über die Antenne wird das Funksignal der Sender-/Empfängereinheit emittiert und das von dem/den Transponder(n) reflektierte Echo empfangen. Sofern mehrere Sender-/Empfängereinheiten vorhanden sind, kann jede der Sender-/Empfängereinheiten über eine eigene Antenne verfügen. Üblicherweise ist die Antenne in die zugehörige Sender-/Empfängereinheit integriert und bildet mit dieser eine gemeinsame Baueinheit.

Vorzugsweise emittiert und empfängt die Sender-/Empfängereinheit über die Antenne ein Radarsignal, wobei zweckmäßigerweise das Funksignal ein Radarsignal in einem Frequenzbereich von 1 GHz bis 10 GHz ist, besonders bevorzugt 4 GHz bis 7 GHz, ganz besonders bevorzugt 5 GHz bis 6 GHz.

Die Erfindung betrifft auch einen Lastzug, wobei der Lastzug ein erstes und mindestens ein zweites Fahrzeug umfasst. Gemäß einer ersten bevorzugten Ausführungsform weist die Sensoreinrichtung eine auf dem ersten Fahrzeug angeordnete Sender-/Empfängereinheit auf und mindestens ein Transponder ist auf dem zweiten Fahrzeug angeordnet. Hierdurch lässt sich eine zumindest zweidimensionale Ortung des zweiten Fahrzeugs während der Annäherung des ersten Fahrzeugs vor dem Ankuppeln realisieren. Als Lastzüge kommen daher besonders Gliederzüge infrage, deren Deichselanhänger freistehend und ohne Abstützelemente wie Stützwinden geparkt werden, so dass auch die Deichsel des abgestellten zweiten Fahrzeugs in einem verhältnismäßig engen räumlichen Rahmen verbleibt und von der Bolzenkupplung des ersten Fahrzeugs beim nächsten Ankuppeln getroffen wird.

Gemäß einer alternativen, zweiten Ausführungsform ist in einem vertikalen Höhenabstand zu der Sender-/Empfängereinheit eine zweite Sender-/Empfängereinheit mit einer zweiten Antenne angeordnet und an das elektronische Steuergerät angeschlossen. Beide Steuergeräte erfassen den oder die Transponder des zweiten Fahrzeugs und ermöglichen mittels einer Kreuzpeilung oder Triangulation deren Position, insbesondere auch deren Höhenlage. Geeignete Lastzüge können sowohl Gliederzüge als auch Sattelzüge oder Mischformen aus beiden sein. Bei den letztgenannten Sattelzügen ist das vordere Ende des abgekuppelten Sattelaufliegers über Stützwinden abgestützt, wobei die Höhenlage des vorderen Endes stark variieren kann. Aufgrund einer dreidimensionalen Ortung durch zwei Sender-/Empfängereinheiten lassen sich auch Sattelauflieger besonders treffsicher von autonom fahrenden Sattelzugmaschinen aufnehmen und ankuppeln.

Gemäß einer alternativen, dritten Ausführungsform ist an der dem ersten Fahrzeug zugewandten Ende des zweiten Fahrzeugs ein aktiver Transponder angeordnet, wobei der aktive Transponder mit einem Höhenmesssensor verbunden ist und das Messsignal des Höhenmesssensors zusammen mit seiner individuellen Codierung an die Sender-/Empfängereinheit übermittelt wird. Bei dieser Ausgestaltung wird die Höhenlage des an dem zweiten Fahrzeug befindlichen Kupplungsmittels anstatt mit einer zweiten Sender-/Empfängereinheit über einen eigens dafür am zweiten Fahrzeug angeordneten Höhenmesssensor ermittelt und dadurch eine dreidimensionale Ausrichtung des zweiten Fahrzeugs bestimmt. Als Höhenmesssensor kommen Infrarotsensoren, Ultraschallsensoren, Laserentfernungsmesser oder mechanische Messwertgeber infrage, welche den Ausfahrzustand der Stützwinden erfassen und mittels eines Potentiometers eine in Abhängigkeit des Ausfahrzustandes variable elektrische Spannung abgeben. Das Messsignal des Höhenmesssensors wird, wenn dieser an einen aktiven Transponder angeschlossen ist, zusammen mit dessen Codierung an die Sender-/Empfängereinheit übermittelt. Die Lastzüge können Gliederzüge oder Sattelzüge oder Mischformen aus beiden sein.

Vorteilhafterweise weist das zweite Fahrzeug ein Kupplungsmittel auf, welches insbesondere ein am zweiten Fahrzeug befestigter Königszapfen sein kann. Der Königszapfen ist auf der Unterseite eines Sattelaufliegers fest mit diesem verbunden und wird zum Ankuppeln an ein erstes Fahrzeug von dessen Sattelkupplung aufgenommen und verriegelt.

Günstigerweise weist der Königszapfen einen Befestigungsflansch, einen sich nach unten daran anschließenden oberen Bund, einen durchmesserkleinen Verriegelungsabschnitt und einen unteren Bund auf, wobei in einer Unterseite des unteren Bundes eine erste Ausnehmung ausgebildet ist, in welche ein erster Transponder eingesetzt ist. Hierdurch resultiert der Vorteil, dass der Transponder nach unten nicht vom Stahl des Königszapfens umgeben ist und entsprechend günstig von der oder den Sender-/Empfängereinheit(en) erkannt wird. In der Ausnehmung ist der Transponder außerdem wirksam vor mechanischen Einflüssen geschützt und unterliegt keiner verschleißbedingten Zerstörung. Der Transponder kann in der Ausnehmung zusätzlich durch einen Kunststoff evakuiert, insbesondere von einer Kunststoffvergussmasse überdeckt sein.

Zweckmäßigerweise ist die Ausnehmung in der Schwenkachse des Königszapfens angeordnet. Infolgedessen befindet sich auch der Transponder stets in der Fahrzeuglängsachse des zweiten Fahrzeugs und trägt dazu bei, dass ein sich autonom annäherndes erstes Fahrzeug ebenfalls in der Fahrzeuglängsachse des zweiten Fahrzeugs positioniert ist.

Vorzugsweise ist auf einer Unterseite des zweiten Fahrzeugs eine Aufliegerplatte ausgebildet, welche sich in angekuppeltem Zustand auf einer Sattelkupplung abstützt, wobei in der Aufliegerplatte eine zweite Ausnehmung ausgebildet ist, in welche ein zweiter Transponder eingesetzt ist. Die Aufliegerplatte erstreckt sich regelmäßig über die gesamte Breite des Sattelaufliegers und ermöglicht dadurch eine weitgehend freie Positionierung des zweiten Transponders. Aufgrund der Unterbringung des zweiten Transponders innerhalb der zweiten Ausnehmung wird dieser in angekuppeltem Zustand nicht von der Sattelkupplung erfasst, ermöglicht aber eine Erkennung durch die Sender-Empfängereinheit über die vor dem Ankuppeln nach unten offene Seite der zweiten Ausnehmung. Der Transponder kann in der Ausnehmung zusätzlich durch einen Kunststoff evakuiert, insbesondere von einer Kunststoffvergussmasse überdeckt sein.

An dem zweiten Fahrzeug kann mindestens eine Stützwinde angeordnet sein, an welcher ein dritter und/oder vierter Transponder befestigt ist. Die Stützwinde weist üblicherweise einen ortsfesten Abschnitt, über den die Stützwinde an dem Sattelauflieger befestigt ist, und einen teleskopierbaren Abschnitt auf, an dessen Ende ein Stützfuß angeordnet ist, der in ausgefahrenem Zustand der Stützwinde den Boden kontaktiert. Der dritte und/oder vierte Transponder kann günstigerweise an dem ortsfesten Abschnitt angeordnet sein, insbesondere wenn mittels Triangulation die Höhe dieses Transponders erfasst werden soll. Da die Stützwinden paarweise und symmetrisch an dem Sattelauflieger montiert sind, ist es sinnvoll, den dritten Transponder an einer Stützwinde und den vierten Transponder an der gegenüberliegenden, zweiten Stützwinde anzuordnen, um dadurch lateral von der Fahrzeuglängsachse beabstandete Bezugspunkte zu erhalten.

Vorteilhafterweise erhält das elektronische Steuergerät ein Signal betreffend die Höhenlage der Luftfederung. Die Luftfederung sorgt in Abhängigkeit ihrer Einstellung für ein Anheben des Chassis und verändert dadurch mitunter die Höhenlage der gesamten Sensoreinrichtung und somit auch die Höhenlage der Antenne(n). Veränderungen des Ausfahrweges der Luftfederung erfasst das elektronische Steuergerät und kompensiert diese im Hinblick auf die tatsächliche Höhe der Antenne(n).

Es hat sich als besonders günstig herausgestellt, wenn in dem elektronischen Steuergerät eine niedrigste Höhenlage der Antenne(n) über Straßenniveau bei abgesenkter Luftfederung eingebbar ist. Die niedrigste Höhenlage der Antenne(n) variiert bei den ersten Fahrzeugen je nach Einbauort und ist zudem herstellerabhängig von der jeweils konkret eingebauten Luftfederung. Nach finalem Anbau der Antenne(n) kann die niedrigste Höhe der Antenne(n) gemessen und als Offset manuell in das elektronische Steuergerät programmiert sein. Das elektronische Steuergerät kann dann aus einem Hubweg der Luftfederung und der niedrigsten Höhenlage die tatsächliche Höhe der Antenne(n) berechnen.

Gemäß einer alternativen, vierten Ausführungsform weist die Sensoreinrichtung eine auf dem zweiten Fahrzeug angeordnete Sender-/Empfängereinheit auf und auf dem ersten Fahrzeug ist ein fünfter Transponder angeordnet. Gegenüber den vorstehenden Ausführungsformen befindet sich vorzugsweise die Sensoreinrichtung nicht auf dem ersten sondern auf dem zweiten Fahrzeug und es befindet sich mindestens ein Transponder an dem ersten anstatt an dem zweiten Fahrzeug. Diese Ausführungsform bedingt eine autarke Stromversorgung des zweiten Fahrzeugs, beispielsweise mittels einer Batterie oder eines Akkumulators, der auch permanent über eine Solarzelle geladen werden kann. Ein derart ausgerüsteter Lastzug korrespondiert mit der ersten Ausführungsform, jedoch mit vertauschten ersten und zweiten Fahrzeugen. Hiermit lässt sich zumindest eine zweidimensionale Ortung des ersten Fahrzeugs erzielen, wobei der von der Sender-/Empfängereinheit identifizierte Messwert in dem vorzugsweise ebenfalls auf dem zweiten Fahrzeug angeordneten elektronischen Steuergerät zu einem Abstandswert zu dem/den Transponder(n) umgerechnet wird und dieser drahtlos mittels eines Datenfunksenders auf das erste Fahrzeug übertragen wird. Das erste Fahrzeug weist hierfür eine entsprechende Datenfunkantenne auf. Diese ist wiederum mit einem Fahrzeugsteuergerät verbunden, welches auf die Fahrfunktionen des ersten Fahrzeugs Einfluss nimmt und das autonome Rangieren und Ankuppeln übernimmt.

Vorzugsweise ist auf dem zweiten Fahrzeug mindestens eine Stützwinde mit einem bezüglich des zweiten Fahrzeugs ortsfesten Abschnitt und einem teleskopierbaren Abschnitt angeordnet, wobei an dem teleskopierbaren Abschnitt ein sechster Transponder befestigt ist. Besonders günstig ist die Anbringung des sechsten Transponders an einem Stützfuß des teleskopierbaren Abschnitts. Bei dieser Ausführungsform ergibt sich zusätzlich zu der zweidimensionalen Positionserkennung die Höhenlage des zweiten Fahrzeugs aus einer Messung der Hubhöhe mindestens einer Stützwinde. Da die Stützwinde mit ihrem ortsfesten Abschnitt an dem zweiten Fahrzeug in immer gleichem Abstand zu der Antenne der Sender-/Empfängereinheit befestigt und zudem rechtwinklig zu der Aufliegerplatte ausgerichtet ist, kann die Hubhöhe der Stützwinde durch eine Abstandsmessung zwischen Antenne und sechstem Transponder berechnet werden. Der wesentliche Vorteil dieser Ausführungsform liegt darin, dass sowohl die seitliche Ausrichtung des ersten Fahrzeugs als auch die Höhenbestimmung des zweiten Fahrzeugs über robuste Transponder erfolgt und keine anderen Sensortypen implementiert und kalibriert werden müssen.

Zweckmäßigerweise ist der erste, zweite und/oder fünfte Transponder in der Fahrzeuglängsachse des ersten oder zweiten Fahrzeugs angeordnet. Aufgrund dieser Anordnung kann eine Positionserkennung bereits mit einem oder wenigen Transpondern erreicht werden.

Das Kupplungsmittel kann auch eine endseitig an einer Deichsel angeordnete Zugöse sein. Diese Ausführungsform ist typischerweise für Gliederzüge relevant.

Vorteilhafterweise ist in der Deichsel und/oder in einem Abschnitt rings um die Zugöse eine dritte Ausnehmung ausgebildet, in welche ein siebter Transponder eingesetzt ist. Der Transponder kann in der dritten Ausnehmung zusätzlich durch einen Kunststoff evakuiert, insbesondere von einer Kunststoffvergussmasse überdeckt sein. Bei einer Starrdeichsel kann ein derartig angeordneter Transponder die Fahrzeuglängsachse markieren.

Sinnvollerweise weist das zweite und/oder erste Fahrzeug einen Karosserieboden mit an seinem dem anderen ersten oder zweiten Fahrzeug benachbarten Ende zwei unteren Ecken auf, wobei an den unteren Ecken ein achter und neunter Transponder befestigt ist. Hierdurch werden von der Sender-/Empfängereinheit weit von der Fahrzeuglängsachse entfernt liegende Bezugspunkte gemessen, die eine besonders genaue Positionserkennung ermöglichen.

Vorzugsweise weist das zweite und/oder erste Fahrzeug eine Dachwand mit an seinem dem anderen ersten oder zweiten Fahrzeug benachbarten Ende zwei oberen Ecken auf, wobei an den oberen Ecken ein zehnter und elfter Transponder befestigt ist. Auch bei dieser Ausführungsform werden von der Fahrzeuglängsachse maximal lateral versetzte Bezugspunkte erfasst und die Genauigkeit der Positionserkennung verbessert. Darüber hinaus kann als zusätzliche Information beispielsweise die Gesamthöhe des zweiten Fahrzeugs erfasst und dem ersten Fahrzeug bereitgestellt werden, insbesondere um einen Dachspoiler optimiert einstellen zu können.

Es kann auch vorkommen, dass an einer Vorderseite des zweiten Fahrzeuges ein in Richtung des ersten Fahrzeuges vorstehendes Anbauelement ausgebildet ist. In diesem Fall kann an der Vorderseite des Anbauelementes ein zwölfter Transponder befestigt sein. Derartige Anbauelemente ragen manchmal in die normierte Kontur der Auflieger- oder Anhängerfront hinein und minimieren das zwischen erstem und zweitem Fahrzeug verbleibende Spaltmaß. Unter einem Anbauelement werden beispielsweise Kühlaggregate verstanden. Durch die Erfassung der Vorderseite des Anbauelementes wird vermieden, dass während des autonomen Ankuppelns ein überdimensioniertes Anbauelement mit Teilen des ersten Fahrzeugs kollidiert.

Günstigerweise sind mindestens drei der Transponder in einem vorgegebenen Abstand zueinander angeordnet, da mit Hilfe von drei Bezugspunkten eine Ebene aufgespannt ist und die Lage dieser aufgespannten Ebene in Kenntnis weiterer Dimensionen des ersten oder zweiten Fahrzeugs zur besonders genauen Positionserkennung des ersten oder zweiten Fahrzeugs dient.

Zum besseren Verständnis wird die Erfindung nachfolgend anhand von sieben Figuren näher erläutert. Es zeigen die
- **Fig. 1:**: eine Seitenansicht auf eine an einem Sattelzug angeordnete Vorrichtung gemäß einer ersten Ausführungsform mit an der Rückwand der Fahrerkabine angeordneter erster und zweiter Empfängereinheit;
- **Fig. 2:**: eine Seitenansicht auf eine an einem Sattelzug angeordnete Vorrichtung gemäß der ersten Ausführungsform mit im Bereich der Sattelkupplung und Hinterachse angeordneter erster und zweiter Sender-/Empfängereinheit;
- **Fig. 3:**: eine perspektivische Vorderansicht auf einen Auflieger mit daran befestigten Transpondern;
- **Fig. 4:**: eine Seitenansicht auf eine an einem Sattelzug angeordnete Vorrichtung gemäß einer zweiten Ausführungsform mit einer zugfahrzeugseitigen Sender-/Empfängereinheit und einem aufliegerseitigen Höhenmesssensor vor dem Ankuppeln;
- **Fig. 5:**: eine Seitenansicht auf eine an einem Sattelzug angeordnete Vorrichtung gemäß einer dritten Ausführungsform mit Transpondern am Zugfahrzeug und der Stützwinde;
- **Fig. 6:**: eine Draufsicht auf einen Sattelzug gemäß Fig. 5 und
- **Fig. 7:**: eine Seitenansicht auf eine an einem Gliederzug angeordnete Vorrichtung gemäß einer vierten Ausführungsform.

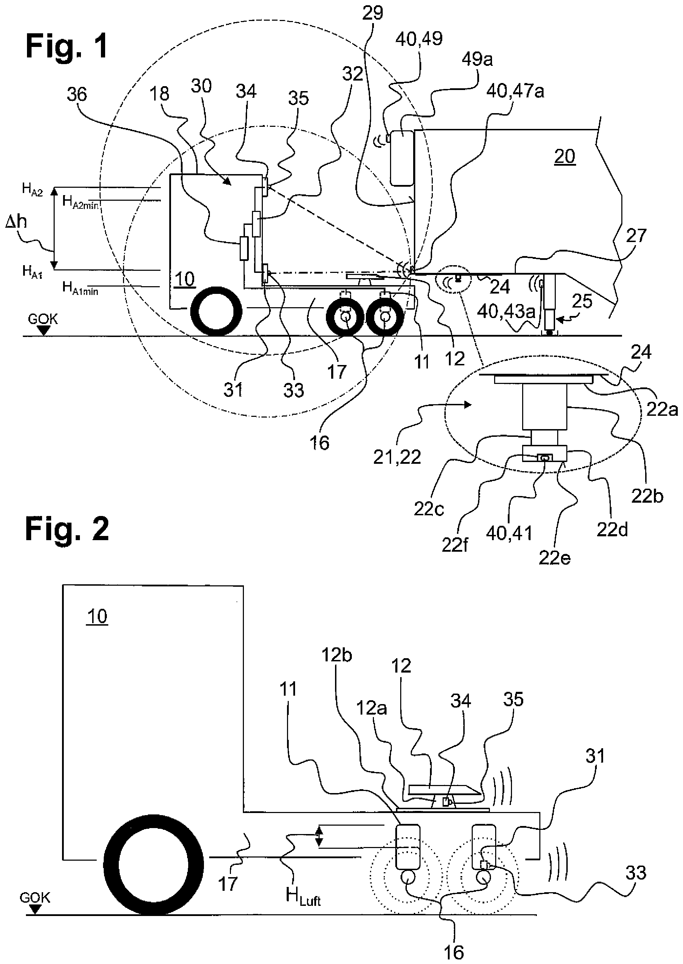

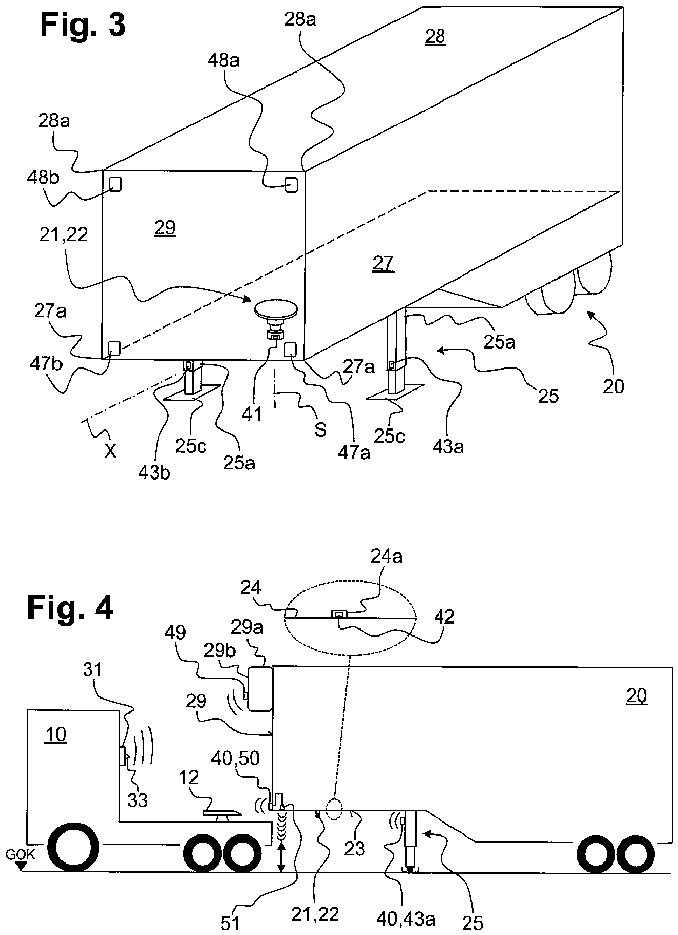

Die Fig. 1 zeigt einen aus einem ersten Fahrzeug 10 und einem zweiten Fahrzeug 20 gebildeten Sattelzug in einer Seitenansicht. Das erste Fahrzeug 10 befindet sich in einer noch getrennten Position vor dem zweiten Fahrzeug 20, welches auf seinen beiden Stützwinden 25 aufsteht. Die Stützwinden 25 sind am zweiten Fahrzeugs 20 beidseitig der Fahrzeuglängsachse X angebracht (siehe Fig. 3) und halten das dem ersten Fahrzeug 10 zugewandte Ende des zweiten Fahrzeugs 20 entsprechend ihres Ausfahrzustandes in der gezeigten Höhenlage.

Das erste Fahrzeug 10 ist mit einer Luftfederung 11 ausgestattet, die sich auf Hinterachsen 16 abstützt und das Fahrzeugchassis 17 um den in Fig. 2 dargestellten Hubweg H_{Luft} absenkt oder anhebt. In Abhängigkeit des Hubwegs H_{Luft} verändert auch eine am ersten Fahrzeug 10 befindliche Sattelkupplung 12 ihre Höhenlage zusammen mit dem Fahrzeugchassis 17. Für ein Ankuppeln des zweiten Fahrzeugs 20 an das erste Fahrzeug 10 fährt letzteres rückwärts soweit unter das zweite Fahrzeug 20, bis ein daran angeordnetes Kupplungsmittel 21 in Form eines nach unten vorstehenden Königszapfens 22 in Wirkeingriff mit der Sattelkupplung 12 gelangt.

Der Königszapfen 22 weist einen oberen Befestigungsflansch 22a auf, mit welchem der Königszapfen 22 fest mit dem zweiten Fahrzeug 20 verbunden, insbesondere verschraubt ist. Nach unten geht der Befestigungsflansch 22a in einen oberen Bund 22b über, dem sich ein durchmesserreduzierter Verriegelungsabschnitt 22c anschließt. Der Verriegelungsabschnitt 22c wird nach unten von einem unteren Bund 22d begrenzt, dessen Durchmesser mit dem des oberen Bundes 22b übereinstimmt. In den Verriegelungsabschnitt 22c greift eine nicht gezeigte Verschlussmechanik der Sattelkupplung 12 ein und hält hierdurch den Königszapfen 22 schwenkbar in der Sattelkupplung 12. Unmittelbar über dem Königszapfen 22 erstreckt sich eine ortsfest an einer Unterseite 23 des zweiten Fahrzeugs 20 befestigte Aufliegerplatte 24, welche bei miteinander verbundenen ersten und zweiten Fahrzeugen 10, 20 auf der Sattelkupplung 12 aufliegt und bei Kurvenfahrten über die Sattelkupplung 12 hinweggleitet.

Für ein sicheres Ankuppeln des zweiten Fahrzeugs 20 an das erste Fahrzeug 10 muss die Sattelkupplung 12 unter das vertikale Niveau der Aufliegerplatte 24 ausgerichtet werden, gleichzeitig aber ein Einfahren des Königszapfens 22 in die Sattelkupplung 12 ermöglichen, ohne dass sich dieser aufgrund eines zu tief abgesenkten ersten Fahrzeugs 10 über die Sattelkupplung 12 hinwegbewegt.

Neben der vorstehend beschriebenen Erfassung der Höhenlage des zweiten Fahrzeugs 20 muss das erste Fahrzeug 10 mit seiner Sattelkupplung 12 auch seitlich zum Königszapfen 22 korrekt ausgerichtet sein. Dieses gelingt besonders gut, wenn die Position des Königszapfens 22 und/oder des gesamten zweiten Fahrzeugs 20 anhand einzelner daran definierter Bezugspunkte 40 ermittelt werden kann.

Hierfür sind die Fahrzeuge 10, 20 mit einer Vorrichtung zur Positionserkennung versehen. Die Vorrichtung weist seitens des ersten Fahrzeugs 10 eine Sensoreinrichtung 30 auf, welche eine Sender-/Empfängereinheit 31, eine zweite Sender-/Empfängereinheit 34 sowie ein elektronisches Steuergerät 32 umfasst. Beide Sender-/Empfängereinheiten 31, 34 sind in einem konstanten, vertikalen Höhenabstand Δh zueinander beabstandet. Im vorliegenden Ausführungsbeispiel der Fig. 1 sind die Sender-/Empfängereinheiten 31, 34 an der Rückwand einer Fahrerkabine 18 des ersten Fahrzeugs 10 befestigt.

An dem zweiten Fahrzeug 20 sind mehrere Transponder 41, 43a, 47a, 48a, 49 in definierten Bezugspunkten 40 angeordnet, wobei jeder Transponder 41, 43a, 47a, 48a, 49 von den Sender-/Empfängereinheiten 31, 34 erkannt wird.

Der erste Transponder 41 ist in den Königszapfen 22 integriert, der hierfür vorzugsweise auf einer Unterseite 22e des unteren Bundes 22d mit einer ersten Ausnehmung 22f ausgebildet ist. Die erste Ausnehmung 22f ist nach unten offen und nimmt darin geschützt den ersten Transponder 41 auf. Der erste Transponder 41 ist somit stets in der Fahrzeuglängsachse X des zweiten Fahrzeugs 20 angeordnet und befindet sich zudem in der durch den Königszapfen 22 verlaufenden Schwenkachse S (siehe Fig. 3). Der erste Transponder 41 unterstützt somit besonders effektiv auch die Ausrichtung eines sich schräg auf das zweite Fahrzeug 20 annähernden erstes Fahrzeugs 10 vor dem Ankuppeln.

Die Stützwinden 25 umfassen, wie besonders gut in Fig. 3 zu erkennen ist, einen ortsfesten Abschnitt 25a, mit welchem die Stützwinde 25 an dem zweiten Fahrzeug 20 befestigt ist, und einen hierzu teleskopierbaren Abschnitt 25b mit einem endseitigen Stützfuß 25c. An den ortsfesten Abschnitten 25a ist ein dritter und vierter Transponder 43a, 43b befestigt, wobei in der Darstellung der Fig. 1 lediglich der in der Bildebene vordere dritte Transponder 43a sichtbar ist. Die an den Stützwinden 25 angeordneten dritten und vierten Transponder 43a, 43b sind bezüglich der Fahrzeuglängsachse X besonders weit seitlich distanziert und tragen dazu bei, eine besonders exakte Positionsbestimmung des zweiten Fahrzeugs 20 lateral zu der Fahrzeuglängsachse X durchführen zu können.

An dem in Fig. 1 gezeigten zweiten Fahrzeug 20 ist an dessen Vorderseite 29 ein Anbauelement 29a zu erkennen, welches wiederum an seiner Vorderseite 29b den zwölften Transponder 49 trägt. Der zwölfte Transponder 49 dient neben der Positionsbestimmung auch dazu, die Vorderseite 29b des Anbauelementes 29a zu erfassen und ein Anschlagen des Anbauelementes 29a an die Fahrerkabine 18 zu verhindern.

Die Sender-/Empfängereinheit 31 verfügt über eine Antenne 33 und die zweite Sender-/Empfängereinheit 34 über eine zweite Antenne 35, wobei die Antennen 33, 35 jeweils ein Funksignal abgeben, das jeweils beispielhaft auf den achten Transponder 47a trifft und von diesem reflektiert wird. Der achte Transponder 47a ist an einer der unteren Ecken 27a im Übergangsbereich der Vorderseite 29 des zweiten Fahrzeugs 20 zu dessen Karosserieboden 27 angeordnet.

Die jeweilige Sender-/Empfängereinheit 31, 34 identifiziert das zugehörige, vom achten Transponder 47a reflektierte Funksignal und stellt es dem elektronischen Steuergerät 32 zur Verfügung, welche hieraus einen Abstand zu dem achten Transponder 47a berechnet. Der beispielhaft gezeigte achte Transponder 47a liegt im Schnittpunkt der Abstandsmessungen beider Sender-/Empfängereinheiten 31, 34.

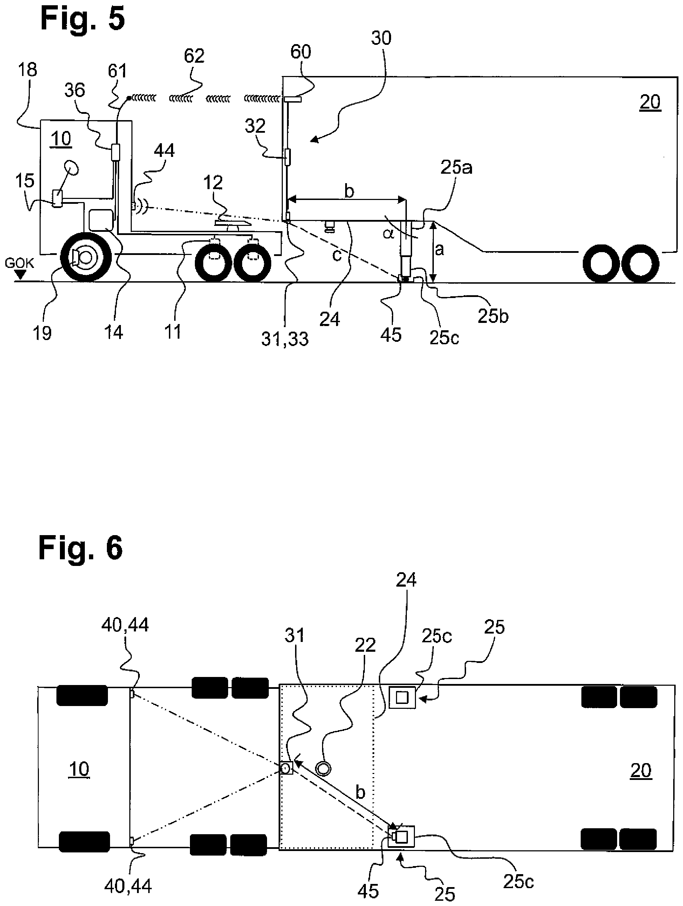

Das elektronische Steuergerät 32 kommuniziert auch mit einem Fahrzeugsteuergerät 36, welches Einfluss auf die gezeigte Luftfederung 11 sowie auf die in Fig. 5 dargestellten Komponenten des ersten Fahrzeugs 10 nimmt, insbesondere Motor und Getriebe 14, Fahrzeuglenkung 15 und/oder Bremse 19. Das Fahrzeugsteuergerät 36 stellt dem elektronischen Steuergerät 32 Daten bezüglich des vorliegenden ist-Zustandes bereit, wie beispielsweise den Hubweg H_{Luft} der Luftfederung 11, so dass das elektronische Steuergerät 32 eine niedrigste Höhenlage H_{A1min} der Antenne 33 und die niedrigste Höhenlage H_{A2min} der zweiten Antenne 35 um den Hubweg H_{Luft} korrigieren kann und somit eine tatsächliche Höhe H_{A1} der Antenne 33 und eine tatsächliche Höhe H_{A2} der zweiten Antenne 35 gegenüber Straßenniveau GOK berechnen kann.

In Kenntnis der tatsächlichen Höhen H_{A1}, H_{A2} der Antennen 33, 35 erfolgt die Bestimmung der absoluten Höhe des achten Transponders 47a und, sofern dessen Höhe ein korrektes Unterfahren des ersten Fahrzeugs 10 unter das zweite Fahrzeug 20 nicht erlaubt, ein Nachregeln der Luftfederung 11.

Die Fig. 2 zeigt ein weiteres Ausführungsbeispiel der Erfindung, bei welchem die Sender-/Empfängereinheiten 31, 34 heckseitig versetzt sind und nunmehr im Bereich der Hinterachse 16 sowie an einem feststehenden Teil der Sattelkupplung 12 befestigt sind. Unter einem feststehenden Teil der Sattelkupplung 12 wird zunächst einer der Lagerböcke 12a verstanden, von denen zwei vorhanden sind und über welche die Sattelkupplung 12 gegenüber dem Fahrzeugchassis 17 gehalten ist. Häufig erstreckt sich zwischen den Lagerböcken 12a eine daran angreifende Stütztraverse, an der ebenfalls die zweite Sender-/Empfängereinheit 34 befestigt sein kann. Bei einer anderen Ausführungsform der Sattelkupplung 12 können die Lagerböcke 12a auch auf einer Lagerplatte 12b befestigt sein, die üblicherweise von oben auf einen hier nicht gezeigten Fahrzeugrahmen und/oder Fahrzeughilfsrahmen aufgelegt ist.

Sofern die Sender-/Empfängereinheit 31 an der Hinterachse 16 des ersten Fahrzeugs 10 befestigt ist, braucht hierfür keine Höhenkorrektur um den Hubweg H_{Luft} vorgenommen zu werden, da die Hinterachsen 16 während des Ankuppelns auf der Geländeoberkante GOK abrollen und nicht angehoben sind.

Die Fig. 3 zeigt in einer perspektivischen Ansicht das zweite Fahrzeug 20 und die an der Vorderseite 29 angeordneten Transponder 47a, 47b, 48a, 48b. Der achte und neunte Transponder 47a, 47b befinden sich in den unteren Ecken 27a der Vorderseite 29 des zweiten Fahrzeugs 20, angrenzend an den Karosserieboden 27. Ein zehnter und elfter Transponder 48a, 48b sind ebenfalls in oberen Ecken 28a an der Vorderseite 29 des zweiten Fahrzeugs 20 angebracht, angrenzend an eine Dachwand 28. Mit Hilfe der achten bis elften Transponder 47a, 47b, 48a, 48b kann die Sensoreinrichtung 30 ein Abbild der Stirnseite des zweiten Fahrzeugs 20 rekonstruieren, so dass sich das erste Fahrzeug 10 infolgedessen zum Ankuppeln zielgenau dem zweiten Fahrzeug 20 anzunähern vermag.

In Fig. 4 ist eine weitere Ausführungsform in einer Seitenansicht dargestellt, bei welcher die Sensoreinrichtung 30 lediglich die einzige Sender-/Empfängereinheit 31 aufweist. Zur Präzisierung der Höhenlage des zweiten Fahrzeugs 20 ist an dessen Vorderseite 29 unmittelbar an einer Stoßkante zu dem Karosserieboden 27 ein aktiver Transponder 50 befestigt, der zunächst im Einwirkungsbereich der Sender-/Empfängereinheit 31 liegt und dem Zweck der Abstandsmessung dient.

An den aktiven Transponder 50 ist zusätzlich ein Höhenmesssensor 51 angeschlossen, welcher berührungslos den lotrechten Abstand zwischen der Aufliegerplatte 24 und der Geländeoberkante GOK misst. Dieser Messwert des Höhenmesssensors 51 wird kontinuierlich an den aktiven Transponder 50 übertragen und zusammen mit dessen Codierung von der Sender-/Empfängereinheit 31 ausgelesen.

Der aktive Transponder 50 kann ebenso wie ein beispielhaft gezeigter zweiter Transponder 42 in einer eigens dafür in der Aufliegerplatte 24 ausgeformten zweiten Ausnehmung 24a eingesetzt sein.

Die Fig. 5 und 6 zeigen ein weiteres Ausführungsbeispiel der Erfindung, bei welcher die Sensoreinrichtung 30 auf dem zweiten Fahrzeug 20 angeordnet ist. Die Sender-/Empfängereinheit 31 mit der daran ausgebildeten Antenne 33 ist im Bereich der Vorderseite 29 des zweiten Fahrzeugs 20 in die Aufliegerplatte 24 eingesetzt und emittiert ein Radarsignal, welches von zwei an dem ersten Fahrzeug 10 angebrachten fünften Transpondern 44 reflektiert wird. Der oder die fünfte(n) Transponder 44 sind ortsfest an der Rückwand der Fahrerkabine 18 befestigt und ermöglichen über eine Abstandsmessung eine Positionserkennung des sich rückwärts annähernden ersten Fahrzeugs 10.

Der Abstand der Aufliegerplatte 24 des zweiten Fahrzeugs 20 über der Geländeoberkante GOK wird systemimmanent durch eine Abstandsmessung von der Antenne 33 der Sender-/Empfängereinheit 31 zu einem am teleskopierbaren Abschnitt 25b der Stützwinde 25 angeordneten sechsten Transponder 45 berechnet. Der sechste Transponder 45 ist vorzugsweise möglichst weit unten am teleskopierbaren Abschnitt 25 angebracht, besonders bevorzugt an dem Stützfuß 25c des teleskopierbaren Abschnitts 25b.

Der ortsfeste Abschnitt 25a erstreckt sich in seiner axialen Richtung unter einem rechten Winkel α zur Aufliegerplatte 24 nach unten, genauso wie der darin ausschließlich translatorisch geführte teleskopierbare Abschnitt 25b. Der ortsfeste Abschnitt 25a ist nach der Montage der erfindungsgemäßen Vorrichtung in einem konstanten Abstand b, parallel zur Erstreckung der Aufliegerplatte 24, von der Antenne 33 der Sender-/Empfängereinheit 31 beabstandet. Die direkte Entfernung zwischen Antenne 33 und dem sechsten Transponder 45 wird von der Sender-/Empfängereinheit 31 gemessen und entspricht einer Messstrecke c. Das elektronische Steuergerät 32 errechnet aus dem darin hinterlegten konstanten Abstand b und der Messstrecke c einen vertikalen Abstand a entsprechend dem Ausfahrstatus der Stützwinde 25.

Die Messwerte der Abstandsmessungen zu den Transpondern 44 und der berechnete Wert des Abstandes a übermittelt das elektronische Steuergerät 32 über einen am zweiten Fahrzeug 20 angeordneten Datenfunksender 60 als Datensignal 62 an das vor dem Ankuppeln noch beabstandete aber sich annähernde erste Fahrzeug 10, welches zum Empfang des Datensignals 62 eine Datenfunkantenne 61 aufweist, die an das Fahrzeugsteuergerät 36 angeschlossen ist. Das Fahrzeugsteuergerät 36 kann auch mehrere miteinander vernetzte Fahrzeugsteuergeräte umfassen. Das Fahrzeugsteuergerät 36 nimmt Einfluss auf die Steuerung von Motor und/oder Getriebe 14, die Fahrzeuglenkung 15 und die Bremse 19 des autonom fahrenden ersten Fahrzeugs 10.

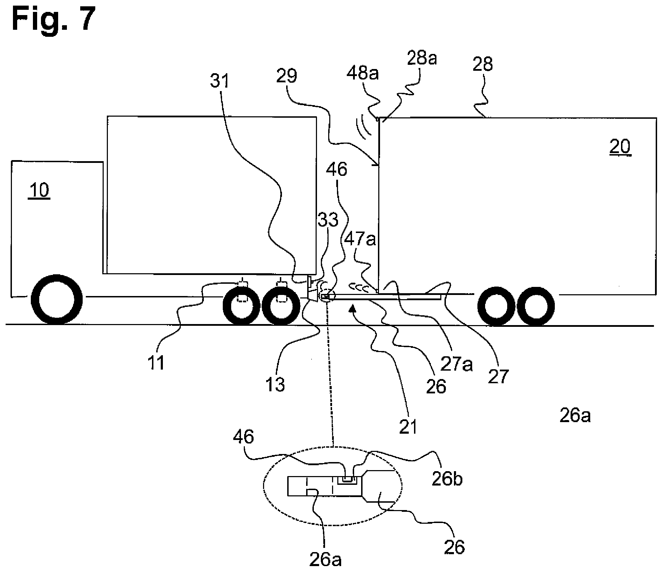

In der Fig. 7 handelt es sich um einen Lastzug in Form eines Gliederzuges. Das erste Fahrzeug weist heckseitig eine Bolzen- oder Maulkupplung 13 auf, in welcher nach dem Ankuppeln des zweiten Fahrzeugs 20 das Kupplungsmittel 21 des zweiten Fahrzeugs 20 eingeführt und verriegelt ist. Das Kupplungsmittel 21 des zweiten Fahrzeugs 20 ist eine Deichsel 26, die im gezeigten Ausführungsbeispiel als Starrdeichsel ausgeführt ist. An einem distalen Ende ist an der Deichsel 26 eine Zugöse 26a ausgebildet, durch welche nach dem Ankuppeln ein Kupplungsbolzen (nicht gezeigt) der Bolzenkupplung 13 hindurch gesteckt ist.

Das erste Fahrzeug 10 weist außerdem eine Sender-/Empfängereinheit 31 mit einer Antenne 33 auf, die ebenfalls am Heck des ersten Fahrzeugs 10, benachbart zu der Bolzenkupplung 13, angebracht ist. Im Bereich der Zugöse 26a weist die Deichsel 26 eine dritte Ausnehmung 26b auf, in welche geschützt ein siebter Transponder 46 eingesetzt ist. Grundsätzlich ist es auch möglich, den siebten Transponder 46 unmittelbar auf der Oberfläche der Deichsel 26 zu applizieren. Hierdurch wird der siebte Transponder 46 noch besser von der Sender-/Empfängereinheit 31 identifiziert, ist jedoch im Fahrbetrieb einem größeren Risiko von Beschädigungen ausgesetzt.

Die Kontur der Vorderseite 29 des zweiten Fahrzeugs 20 ist durch an den unteren Ecken 27a angeordnete achte und neunte Transponder 47a, 47b sowie an den oberen Ecken 28a angeordnete zehnte und elfte Transponder 48a, 48b begrenzt und deren Position durch die Sender-/Empfängereinheit 31 erkennbar. In der Darstellung der Fig. 7 ist lediglich der in der Bildebene vorne liegenden achte und zehnte Transponder 47a, 48a sichtbar.

### Bezugszeichenliste

- 10: erstes Fahrzeug
- 11: Luftfederung
- 12: Sattelkupplung
- 12a: Lagerbock
- 12b: Lagerplatte
- 13: Bolzenkupplung
- 14: Motor und Getriebe
- 15: Fahrzeuglenkung
- 16: Hinterachse
- 17: Fahrzeugchassis
- 18: Fahrerkabine
- 19: Bremse

- 20: zweites Fahrzeug
- 21: Kupplungsmittel
- 22: Königszapfen
- 22a: Befestigungsflansch
- 22b: oberer Bund
- 22c: Verrieglungsabschnitt
- 22d: unterer Bund
- 22e: Unterseite unterer Bund
- 22f: erste Ausnehmung
- 23: Unterseite zweite Fahrzeug
- 24: Aufliegerplatte
- 24a: zweite Ausnehmung
- 25: Stützwinde
- 25a: ortsfester Abschnitt Stützwinde
- 25b: teleskopierbarer Abschnitt Stützwinde
- 25c: Stützfuß
- 26: Deichsel
- 26a: Zugöse
- 26b: dritte Ausnehmung
- 27: Karosserieboden
- 27a: untere Ecken
- 28: Dachwand
- 28a: obere Ecken
- 29: Vorderseite zweite Fahrzeug
- 29a: Anbauelement
- 29b: Vorderseite Anbauelement

- 30: Sensoreinrichtung
- 31: Sender-/Empfängereinheit
- 32: elektronisches Steuergerät
- 33: Antenne
- 34: zweite Sender-/Empfängereinheit
- 35: zweite Antenne
- 36: Fahrzeugsteuergerät

- 40: Bezugspunkt
- 41: erster Transponder (Königszapfen)
- 42: zweiter Transponder (Aufliegerplatte)
- 43a: dritter Transponder (Stützwinde)
- 43b: vierter Transponder (Stützwinde)
- 44: fünfter Transponder (erstes Fahrzeug)
- 45: sechster Transponder (Stützwinde ausgefahren)
- 46: siebter Transponder (Zugöse)
- 47a: achter Transponder (untere Ecke)
- 47b: neunter Transponder (untere Ecke)
- 48a: zehnter Transponder (obere Ecke)
- 48b: elfter Transponder (obere Ecke)
- 49: zwölfter Transponder (Anbauelement)
- 50: aktiver Transponder (Vorderkante zweites Fahrzeug)
- 51: Höhenmesssensor

- 60: Datenfunksender
- 61: Datenfunkantenne
- 62: Datensignal

- α: Winkel Stützwinde/Aufliegerplatte
- a: Abstand Aufliegerplatte/GOK
- b: Abstand Sender-/Empfängereinheit/Stützwinde
- c: Messstrecke Stützwinde
- GOK: Straßenniveau, Geländeoberkante
- Δh: vertikaler Höhenabstand
- H_{A1min}: niedrigste Höhenlage Antenne
- H_{A2min}: niedrigste Höhenlage zweite Antenne
- H_{Luft}: Hubweg Luftfederung
- H_{A1}: tatsächliche Höhe Antenne
- H_{A2}: tatsächliche Höhe zweite Antenne
- S: Schwenkachse Königszapfen
- X: Fahrzeuglängsachse

## Patentansprüche

1. Lastzug mit einer daran verbauten Vorrichtung zur Positionserkennung eines ersten oder zweiten miteinander zu kuppelnden Fahrzeugs (10, 20), wobei der Lastzug ein erstes und mindestens zweites Fahrzeug (10, 20) umfasst und die Vorrichtung eine an dem ersten oder zweiten Fahrzeug (10, 20) angeordnete Sensoreinrichtung (30) aufweist, welche mindestens einen Bezugspunkt (40) des anderen zweiten oder ersten Fahrzeugs (20, 10) messtechnisch erfasst,
wobei die Sensoreinrichtung (30) mindestens eine Sender-/Empfängereinheit (31) aufweist und an dem mindestens einen Bezugspunkt (40) ein Transponder (41) befestigbar ist, welcher ein Funksignal der Sender-/Empfängereinheit (31) reflektiert,
wobei die Sensoreinrichtung (30) ein elektronisches Steuergerät (32) umfasst,
und die Sender-/Empfängereinheit (31) auf dem ersten Fahrzeug (10) und der mindestens eine Transponder (41-43b, 45-50) auf dem zweiten Fahrzeug angeordnet ist,
**dadurch gekennzeichnet,**
**dass** das elektronische Steuergerät (32) ein Signal betreffend die Höhenlage einer Luftfederung (11) erhält und aus der Laufzeit des Funksignals die direkte Entfernung zu dem mindestens einen Transponder (41) berechnet.

2. Lastzug nach Anspruch 1, **dadurch gekennzeichnet, dass** an dem anderen zweiten oder ersten Fahrzeug (20, 10) mehrere Bezugspunkte (40) vorhanden sind, an denen jeweils ein Transponder (41-50) befestigbar ist, wobei jeder Transponder (41-50) das Echo derart individuell codiert, dass es dem jeweiligen Transponder (41-50) eindeutig zuordbar ist.

3. Lastzug nach Anspruch 1 oder 2, **dadurch gekennzeichnet, dass** die Sensoreinrichtung (30) mindestens eine Antenne (33, 35) umfasst, die an die zugehörige Sender-/Empfängereinheit (31, 34) angeschlossen ist.

4. Lastzug nach Anspruch 3, **dadurch gekennzeichnet, dass** jede Sender-/Empfängereinheit (31, 34) über die Antenne (33, 35) ein Radarsignal emittiert und empfängt.

5. Lastzug einem der Ansprüche 1 bis 4, **dadurch gekennzeichnet, dass** in einem vertikalen Höhenabstand (Δh) zu der Sender-/Empfängereinheit (31) eine zweite Sender-/Empfängereinheit (34) mit einer zweiten Antenne (35) angeordnet und an das elektronische Steuergerät (32) angeschlossen ist.

6. Lastzug nach einem der Ansprüche 1 bis 4, **dadurch gekennzeichnet, dass** an der dem ersten Fahrzeug (10) zugewandten Ende des zweiten Fahrzeugs (20) ein aktiver Transponder (50) angeordnet ist, wobei der aktive Transponder (50) mit einem Höhenmesssensor (51) verbunden ist und das Messsignal des Höhenmesssensors (51) zusammen mit seiner individuellen Codierung an die Sender-/Empfängereinheit (31) übermittelt.

7. Lastzug nach einem der Ansprüche 1 bis 6, **dadurch gekennzeichnet, dass** das zweite Fahrzeug (20) ein Kupplungsmittel (21) aufweist.

8. Lastzug nach Anspruch 7, **dadurch gekennzeichnet, dass** das Kupplungsmittel (21) ein am zweiten Fahrzeug (20) befestigter Königszapfen (22) ist.

9. Lastzug nach Anspruch 8, **dadurch gekennzeichnet, dass** der Königszapfen (22) einen Befestigungsflansch (22a), einen sich nach unten daran anschließenden oberen Bund (22b), einen durchmesserkleinen Verriegelungsabschnitt (22c) und einen unteren Bund (22d) aufweist, wobei in einer Unterseite (22e) des unteren Bundes (22d) eine erste Ausnehmung (22f) ausgebildet ist, in welche ein erster Transponder (41) eingesetzt ist.

10. Lastzug nach einem der Ansprüche 1 bis 9, **dadurch gekennzeichnet, dass** auf einer Unterseite (23) des zweiten Fahrzeugs (20) eine Aufliegerplatte (24) ausgebildet ist, welche sich in angekuppeltem Zustand auf einer Sattelkupplung (12) abstützt, wobei in der Aufliegerplatte (24) eine zweite Ausnehmung (24a) ausgebildet ist, in welche ein zweiter Transponder (42) eingesetzt ist.

11. Lastzug nach einem der Ansprüche 1 bis 10, **dadurch gekennzeichnet, dass** an dem zweiten Fahrzeug (20) mindestens eine Stützwinde (15) angeordnet ist, an welcher ein dritter und/oder vierter Transponder (43a, 43b) befestigt ist.

12. Lastzug nach Anspruch 1, **dadurch gekennzeichnet, dass** in dem elektronischen Steuergerät (32) eine niedrigste Höhenlage (H_{A1min}, H_{A2min}) der Antenne(n) (33, 35) über Straßenniveau (GOK) bei abgesenkter Luftfederung (11) eingebbar ist.

13. Lastzug nach Anspruch 12, **dadurch gekennzeichnet, dass** das elektronische Steuergerät (32) aus einem Hubweg (H_{Luft}) der Luftfederung (11) und der niedrigsten Höhenlage (Hₘᵢₙ) die tatsächliche Höhe (H_{A1}, H_{A2}) der Antenne(n) (33, 35) berechnet.

14. Lastzug nach Anspruch 7, **dadurch gekennzeichnet, dass** Kupplungsmittel (21) eine endseitig an einer Deichsel (26) angeordnete Zugöse (26a) ist, wobei an der Deichsel (26) und/oder in einem Abschnitt rings um die Zugöse (26a) ein siebter Transponder (46) angeordnet ist.

## Claims

1. Road train having a device fitted thereon for identifying the position of a first or second vehicle (10, 20) which are intended to be coupled together, wherein the road train comprises a first and at least second vehicle (10, 20) and the device has a sensor device (30) which is arranged on the first or second vehicle (10, 20) and which detects at least one reference point (40) of the other second or first vehicle (20, 10) in technical measurement terms,
wherein the second device (30) has at least one transmitter/receiver unit (31) and a transponder (41) can be secured to the at least one reference point (40) and reflects a radio signal of the transmitter/receiver unit (31),
wherein the sensor device (30) comprises an electronic control device (32),
and the transmitter/receiver unit (31) is arranged on the first vehicle (10) and the at least one transponder (41-43b, 45-50) is arranged on the second vehicle,
**characterised in that**
the electronic control device (32) receives a signal relating to the vertical position of an air suspension (11) and calculates from the running time of the radio signal the direct distance from the at least one transponder (41).

2. Road train according to claim 1, **characterised in that** there are provided on the other second or first vehicle (20, 10) a plurality of reference points (40), to which a transponder (41-50) can be secured in each case, wherein each transponder (41-50) encodes the echo individually in such a manner that it can be clearly associated with the respective transponder (41-50).

3. Road train according to claim 1 or claim 2, **characterised in that** the sensor device (30) comprises at least one antenna (33, 35) which is connected to the associated transmitter/receiver unit (31, 34).

4. Road train according to claim 3, **characterised in that** each transmitter/receiver unit (31, 34) transmits and receives a radar signal via the antenna (33, 35).

5. Road train according to any one of claims 1 to 4, **characterised in that**, with vertical spacing (Δh) from the transmitter/receiver unit (31), a second transmitter/receiver unit (34) with a second antenna (35) is arranged and connected to the electronic control device (32).

6. Road train according to any one of claims 1 to 4, **characterised in that** an active transponder (50) is arranged at the end of the second vehicle (20) facing the first vehicle (10), wherein the active transponder (50) is connected to a height measurement sensor (51) and transmits the measurement signal of the height measurement sensor (51) together with the individual encoding thereof to the transmitter/receiver unit (31).

7. Road train according to any one of claims 1 to 6, **characterised in that** the second vehicle (20) has a coupling means (21).

8. Road train according to claim 7, **characterised in that** the coupling means (21) is a kingpin (22) which is secured to the second vehicle (20).

9. Road train according to claim 8, **characterised in that** the kingpin (22) has a securing flange (22a), an upper collar (22b) which adjoins it in a downward direction, a locking portion (22c) which has a small diameter and a lower collar (22d), wherein at a lower side (22e) of the lower collar (22d) a first recess (22f) in which a first transponder (41) is inserted is formed.

10. Road train according to any one of claims 1 to 9, **characterised in that** at a lower side (23) of the second vehicle (20) a semitrailer plate (24) is formed and in the coupled state is supported on a fifth wheel (12), wherein in the semitrailer plate (24) a second recess (24a) in which a second transponder (42) is inserted is formed.

11. Road train according to any one of claims 1 to 10, **characterised in that** there is arranged on the second vehicle (20) at least one support winch (15), to which a third and/or fourth transponder (43a, 43b) is secured.

12. Road train according to claim 1, **characterised in that** a lowest vertical position (H_{A1min}, H_{A2min}) of the antenna (e) (33, 35) above road level (GOK) with a lowered air suspension (11) can be input in the electronic control device (32).

13. Road train according to claim 12, **characterised in that** the electronic control device (32) calculates the actual height (H_{A1}, H_{A2}) of the antenna (e) (33, 35) from a travel path (H_{Luft}) of the air suspension (11) and the lowest vertical position (Hₘᵢₙ).

14. Road train according to claim 7, **characterised in that** coupling means (21) is a drawbar eye (26a) which is arranged at the end side on a drawbar (26), wherein a seventh transponder (46) is arranged on the drawbar (26) and/or in a portion all the way around the drawbar eye (26a).

## Revendications

1. Train routier équipé d'un dispositif rapporté dévolu à la reconnaissance d'emplacements d'un premier ou d'un second véhicule (10, 20) devant être accouplés mutuellement, ledit train routier comprenant un premier et au moins un second véhicule (10, 20), et ledit dispositif étant muni d'un système de détection (30) qui est implanté sur ledit premier ou second véhicule (10, 20) et qui détecte, par mesure technique, au moins un point de référence (40) de l'autre, second ou premier véhicule (20, 10),
sachant que le système de détection (30) comporte au moins une unité (31) d'émission/réception et qu'il est possible de fixer, au point de référence (40) à présence minimale, un transpondeur (41) renvoyant un signal radio de ladite unité (31) d'émission/réception,
sachant que ledit système de détection (30) inclut un appareil de commande électronique (32)
et que ladite unité (31) d'émission/réception et le transpondeur (41-43b, 45-50) à présence minimale sont implantés, respectivement, sur le premier véhicule (10) et sur le second véhicule,
**caractérisé par le fait**
**que** l'appareil de commande électronique (32) reçoit un signal relatif à la position en hauteur d'une suspension pneumatique (11) et calcule, sur la base de la durée du signal radio, l'éloignement direct par rapport au transpondeur (41) à présence minimale.

2. Train routier selon la revendication 1, **caractérisé par** la présence sur l'autre, second ou premier véhicule (20, 10), de plusieurs points de référence (40) auxquels un transpondeur (41-50) peut être respectivement fixé, chaque transpondeur (41-50) effectuant un codage individuel de l'écho de façon telle qu'il puisse être attribué, de manière univoque, au transpondeur (41-50) considéré.

3. Train routier selon la revendication 1 ou 2, **caractérisé par le fait que** le système de détection (30) inclut au moins une antenne (33, 35) connectée à l'unité associée (31, 34) d'émission/réception.

4. Train routier selon la revendication 3, **caractérisé par le fait que** chaque unité (31, 34) d'émission/réception émet et reçoit un signal radar par l'intermédiaire de l'antenne (33, 35).

5. Train routier selon l'une des revendications 1 à 4, **caractérisé par le fait qu'**une seconde unité (34) d'émission/réception, pourvue d'une seconde antenne (35), est disposée à une distance verticale (Δh) de l'unité (31) d'émission/réception et est raccordée à l'appareil de commande électronique (32).

6. Train routier selon l'une des revendications 1 à 4, **caractérisé par le fait qu'**un transpondeur actif (50) est implanté à l'extrémité du second véhicule (20) qui est tournée vers le premier véhicule (10), lequel transpondeur actif (50) est connecté à un capteur (51) mesureur de hauteurs et transmet, à l'unité (31) d'émission/réception, le signal de mesure dudit capteur (51) mesureur de hauteurs, conjointement à son codage individuel.

7. Train routier selon l'une des revendications 1 à 6, **caractérisé par le fait que** le second véhicule (20) est muni d'un moyen d'accouplement (21).

8. Train routier selon la revendication 7, **caractérisé par le fait que** le moyen d'accouplement (21) est un pivot d'attelage (22) fixé au second véhicule (20).

9. Train routier selon la revendication 8, **caractérisé par le fait que** le pivot d'attelage (22) comprend une bride de fixation (22a), un collet supérieur (22b) s'y rattachant vers le bas, une zone de verrouillage (22c) de petit diamètre et un collet inférieur (22d), sachant qu'un premier évidement (22f), dans lequel un premier transpondeur (41) est inséré, est pratiqué dans une face inférieure (22e) dudit collet inférieur (22d).

10. Train routier selon l'une des revendications 1 à 9, **caractérisé par le fait qu'**un plateau (24) de semi-remorque, ménagé sur une face inférieure (23) du second véhicule (20), prend appui sur une sellette d'attelage (12) à l'état accouplé, sachant qu'un second évidement (24a), dans lequel un deuxième transpondeur (42) est inséré, est pratiqué dans ledit plateau (24) de semi-remorque.

11. Train routier selon l'une des revendications 1 à 10, **caractérisé par le fait qu'**au moins une béquille (25), à laquelle un troisième et/ou un quatrième trans-pondeurs(s) (43a, 43b) est (sont) fixé(s), est implantée sur le second véhicule (20).

12. Train routier selon la revendication 1, **caractérisé par le fait qu'**une position en hauteur (H_{A1min}, H_{A2min}) la plus basse, occupée par l'antenne (les antennes) (33, 35) au-dessus du niveau de la chaussée (GOK) à l'état abaissé de la suspension pneumatique (11), peut être saisie dans l'appareil de commande électronique (32).

13. Train routier selon la revendication 12, **caractérisé par le fait que** l'appareil de commande électronique (32) calcule la hauteur effective (H_{A1}, H_{A2}) de l'antenne (des antennes) (33, 35) sur la base d'une course (H_{Luft}) de la suspension pneumatique (11) et de la position en hauteur (Hₘᵢₙ) la plus basse.

14. Train routier selon la revendication 7, **caractérisé par le fait que** le moyen d'accouplement (21) est un œillet de traction (26a) placé à l'extrémité d'un timon (26), un septième transpondeur (46) étant installé sur ledit timon (26) et/ou dans une région ceinturant annulairement ledit œillet de traction (26a).
